# FASCICULE DE BREVET EUROPEEN

(11) **EP 1 111 301 B1**
(45) Date de publication et mention de la délivrance du brevet: **17.11.2004**
(21) Numéro de dépôt: 00403321.3
(22) Date de dépôt: 28.11.2000
(51) Int. Cl.: F23C 10/10, F23C 101/00, F23C 10/04

(54) **Procédé pour réduire les émissions d'oxydes d'azote dans une installation de combustion en lit fluidisé circulant**
Verfahren zur Verminderung der Stickstoffoxidenemissionen in einer zirkulierenden Wirbelschichtverbrennungsanlage
Process for reducing nitrogen oxide emissions in a circulating fluidised bed combustion plant

(30) Priorité: 22.12.1999 FR 9916244
(43) Date de publication de la demande: 27.06.2001
(73) Titulaire: ALSTOM Power Boilers, 78140 Velizy-Villacoublay (FR)
(72) Inventeur: Malaubier, François, 92350 Le Plessis Robinson (FR); Guilleux, Eugène, 91140 Villebon sur Yvette (FR)
(74) Mandataire: de Lambilly Delorme, Marie Pierre

(56) Documents cités:
- WO-A-94/11672
- WO-A-97/46829
- US-A- 5 054 435
- US-A- 5 341 766

## Description

L'invention se rapporte à une installation de combustion d'un combustible comprenant un foyer fonctionnant en lit fluidisé circulant et dans laquelle au moins une partie du flux de particules solides résultant de la combustion du combustible dans le foyer est renvoyée vers le foyer à travers un échangeur thermique fonctionnant en lit fluidisé.

Dans une installation en lit fluidisé circulant, le combustible qui peut être du charbon concassé, est usuellement injecté dans la partie basse du foyer ou règne une atmosphère réductrice.

Dans cette zone, le combustible subit une pyrolyse avec séparation de la matière combustible d'une part en matières volatiles contenant une fraction de l'azote du combustible d'origine (N-volatile) et d'autre part en matières solides contenant le reliquat de l'azote du combustible d'origine (N-coke). Les grains de coke peuvent séjourner plus ou moins longtemps dans la partie basse du foyer où règne une atmosphère réductrice ; dans ces conditions, on retrouvera dans les produits de réaction du N-coke de l'azote moléculaire plutôt que le polluant NOx. Le temps de séjour des grains de coke dans la zone réductrice dépend essentiellement de la taille de chaque grain. Les particules les plus fines quitteront rapidement cette zone puis traverseront la partie haute du foyer où les réactions se poursuivent.

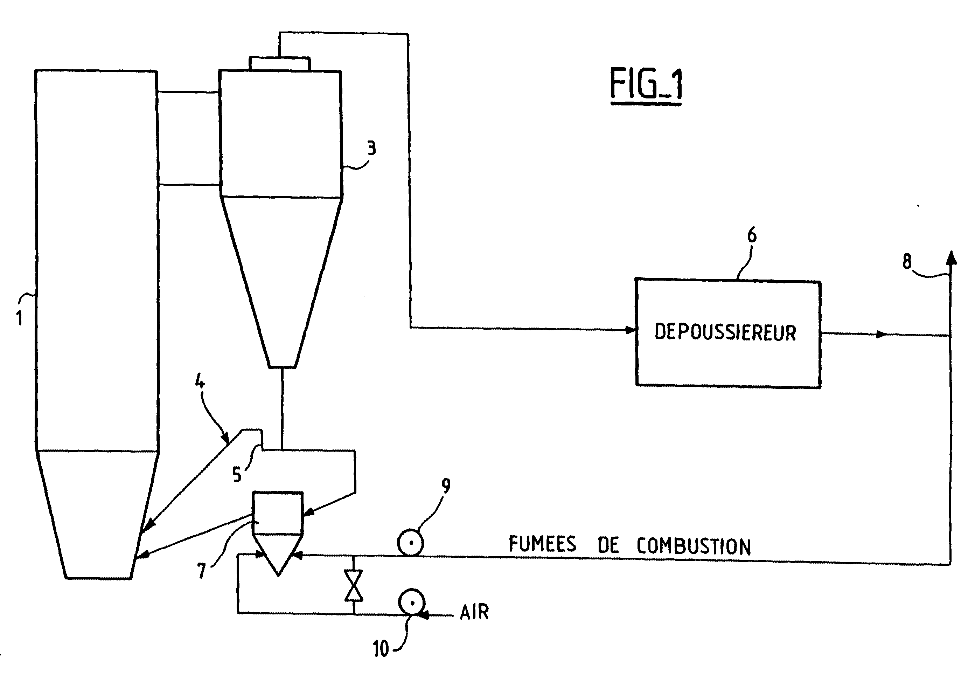

Plus particulièrement sur la figure 1, le flux de particules solides sortant du foyer 1 et captée par un dispositif approprié comme un cyclone 3 est non seulement constitué de cendres minérales mais aussi de coke résultant de la combustion incomplète du combustible dans le foyer. Ce coke contient les éléments d'origine du combustible en particulier du carbone, du soufre, de l'azote.

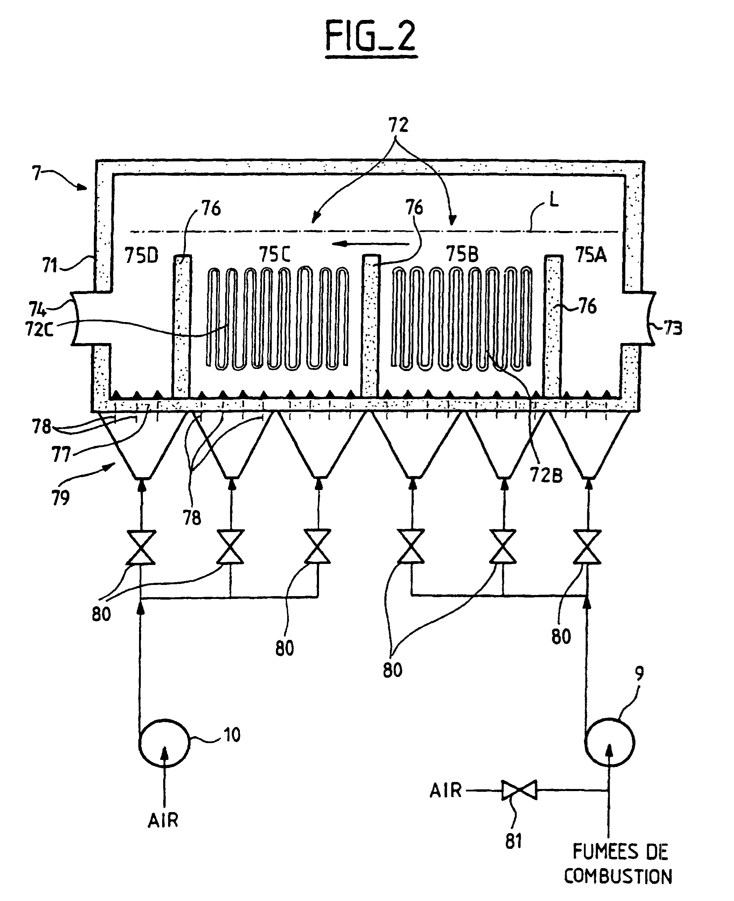

Ces particules solides sont réexpédiées vers le foyer par une disposition appropriée telle qu'une boucle à recirculation 4 équipée d'un siphon 5. Sur la figure 1, une partie du flux de particules solides en recirculation vers le foyer 1 transite dans un échangeur thermique 7 fonctionnant en lit fluidisé. Sur la figure 2, un échangeur thermique 7 fonctionnant en lit fluidisé est constitué d'une enveloppe 71 à l'intérieur de laquelle sont placés des paquets de tubes en serpentin 72 parcourus par de l'eau ou de la vapeur. Le flux de particules solides entre par une gaine d'entrée 73 et traverse l'échangeur grâce à un système de fluidisation pour ressortir par une gaine de sortie 74. Le niveau du lit de particules solides dans l'échangeur est indiqué par le trait L. Ici l'échangeur thermique 7 est extérieur au foyer 1 et est traversé par une partie seulement du flux de particules solides en recirculation vers le foyer 1. Il est entendu que ce qui suit vaut également pour le cas ou l'échangeur thermique 7 fait partie du foyer 1 et reçoit la totalité du flux de particules solides.

Sur la figure 2, l'intérieur de l'enveloppe 71 de l'échangeur 7 est divisé en plusieurs chambres 75A,75B,75C,75D séparées par des murs 76. Dans les chambres 75B et 75C sont placés les paquets de tubes 72B,72C parcourus intérieurement par de l'eau ou de la vapeur. La sole 77 de l'échangeur est équipée de buses 78 permettant l'introduction d'un gaz de fluidisation des solides. En dessous de la sole 77 est placée une boîte à vent 79 contenant le gaz de fluidisation. Cette boîte à vent 79 peut ou non être elle-même subdivisée en au moins autant de compartiments 79A,79B,79C,79D qu'il y a de chambres dans l'enveloppe.

Après avoir traversé les solides depuis le bas de la sole 77 jusqu'au-dessus du niveau L du lit de particules solides, les gaz de fluidisation sont évacués par la gaine 74 pour rejoindre le foyer 1. Au cours de la traversée de l'échangeur 7, la température des solides est abaissée d'une valeur qui est celle qu'ils ont en sortie du cyclone (autour de 850-900°C) jusqu'à une température de l'ordre de 500 à 700°C selon le nombre et la surface des tubes 72 dans l'enveloppe 71.

Dans l'état actuel de la technique, le gaz de fluidisation utilisé dans l'échangeur 7 est de l'air atmosphérique usuellement à une température de 20 à 300°C et à un niveau de compression suffisant pour permettre l'écoulement des solides depuis par exemple la chambre d'entrée 75A jusqu'à la chambre de sortie 75D. Dans chaque chambre règne une atmosphère très oxydante ou si l'on préfère une atmosphère à pression partielle d'oxygène très élevée. Cette technique présente l'inconvénient qu'il se forme des oxydes d'azote par réaction entre le N-coke mentionné plus haut et l'air de fluidisation de l'échangeur 7. La production d'oxyde d'azote est nettement plus importante dans les chambres d'entrée 75A,75B que dans les chambres de sortie 75C,75D du fait de la consommation du N-coke dans les chambres d'entrée et surtout du fait du niveau de température des solides nettement plus élevé dans les chambres d'entrée que dans les chambres de sortie. A titre d'exemple pour un échangeur à quatre chambres comme celui qui est illustré sur la figure 2, le niveau de température des solides est typiquement de l'ordre de 850 à 900°C dans la chambre 75A, de l'ordre de 650 à 800°C dans la chambre 75B et de l'ordre de 500 à 650°C dans la chambre 75C. Les oxydes d'azote qui se forment dans ces chambres par réaction entre le N-coke et l'air de fluidisation sont donc véhiculés vers le foyer où ils se mêlent aux fumées produites pour participer à l'émission globale du polluant.

Les documents US-5054435 et US-5341766 divulguent une installation de combustion à lit fluidisé circulant dans laquelle une partie du flux de particules résultant de la combustion du combustible dans le foyer est renvoyé vers le foyer à travers un échangeur thermique comprenant plusieurs chambres ou zones alimentées avec un gaz de fluidisation pouvant être plus pauvre en oxygène que l'air.

Le but de l'invention est de réduire l'émission d'oxydes d'azote dans une telle installation.

A cet effet, l'invention pour objet un procédé pour réduire les émissions d'oxydes d'azote dans une installation de combustion d'un combustible comprenant un foyer fonctionnant en lit fluidisé circulant et dans laquelle au moins une partie du flux de particules solides résultant de la combustion du combustible dans le foyer est renvoyée vers le foyer à travers un échangeur thermique fonctionnant en lit fluidisé. L'échangeur thermique est alimenté avec un gaz de fluidisation qui est bien plus pauvre en oxygène que l'air et certaines chambres d'échange thermique de l'échangeur thermique sont alimentées avec le gaz de fluidisation pauvre en oxygène utilisé seul ou en mélange avec de l'air et l'autre ou les autres chambres d'échange thermique sont alimentées seulement avec de l'air.

L'idée à la base de l'invention est donc de contrôler la pression partielle en oxygène à l'intérieur des chambres de l'échangeur thermique pour éviter le plus possible la formation d'oxydes d'azote. La pression partielle en oxygène est contrôlée pour être comprise entre 1 et 4%. Ce gaz de fluidisation pauvre en oxygène, contenant typiquement moins de 12% en mole d'oxygène, est de préférence constitué par des fumées de combustion prélevées de préférence en aval d'un dépoussiéreur de fumées de combustion. Ces fumées de combustion sont en effet débarrassées des poussières susceptibles d'endommager par abrasion ou par colmatage les ventilateurs surpresseurs utilisés pour envoyer le gaz de fluidisation sous pression dans l'échangeur thermique.

En réglant la proportion d'air dans le mélange qui est injecté dans les chambres d'échange thermique, on peut ainsi obtenir une combustion du carbone dans l'échangeur en présence d'une atmosphère à basse teneur en oxygène et donc avec un minimum d'émissions d'oxydes d'azote.

Pour éviter de recycler trop de fumées dans l'échangeur thermique, il est avantageux d'alimenter les chambres les plus froides de l'échangeur avec de l'air non mélangé aux fumées de combustion car dans ces chambres, la formation d'oxydes d'azote est peu importante.
La figure 1 illustre une installation de combustion pour la mise en oeuvre du procédé selon l'invention.
La figure 2 illustre plus en détail un échangeur thermique en lit fluidisé.

L'installation de combustion illustrée sur la figure 1 a été présentée en partie ci-dessus. Les fumées de combustion qui sortent du haut du cyclone 3 transitent par un dépoussiéreur 6 électrostatique ou à manches pour être débarrassées des poussières avant d'être évacuées en 8 par une cheminée. En aval du dépoussiéreur 6, une partie des fumées de combustion est prélevée pour servir de gaz de fluidisation à l'échangeur thermique 7 après avoir été surpressées par un ventilateur 9. De l'air surpressé par un ventilateur 10 peut également être utilisé pour fluidiser le flux de particules solides dans l'échangeur 7 comme illustré sur la figure 2.

Sur la figure 2, les fumées de combustion seules ou mélangées avec de l'air alimentent les chambres 75A et 75B les plus chaudes de l'échangeur 7 pour fluidiser le flux de particules solides. Les chambres 75C et 75D les plus froides sont alimentées de préférence avec de l'air seulement. Le débit du gaz de fluidisation dans chaque chambre à travers les boîtes à vent 79 et les buses 78, que ce soit de l'air seul, des fumées de combustions seules ou un mélange de fumées de combustion et d'air, est réglé par des vannes 80. La quantité d'air dans le mélange air/fumées de combustion est également réglée par une vanne 81. Il est entendu que les fumées de combustion pauvres en oxygène pourraient également être injectées dans toutes les chambres de l'échangeur thermique.

## Revendications

1. Un procédé pour réduire les émissions d'oxydes d'azote dans une installation de combustion d'un combustible comprenant un foyer (1) fonctionnant en lit fluidisé circulant et dans laquelle au moins une partie du flux de particules solides résultant de la combustion du combustible dans le foyer est renvoyée vers le foyer à travers plusieurs chambres (75A, 75B, 75C, 75C, 75D) d'un échangeur thermique (7) fonctionnant en lit fluidisé, alimenté avec un gaz de fluidisation qui est bien plus pauvre en oxygène que l'air, **caractérisé en ce que** une ou certaines (75A,75B) des chambres d'échange thermique sont alimentées avec le gaz de fluidisation pauvre en oxygène utilisé seul ou en mélange avec de l'air et l'autre ou les autres (75C,75D) chambres d'échange thermique sont alimentées seulement avec de l'air.

2. Le procédé selon la revendication 1, selon lequel l'installation de combustion comprend un dépoussiéreur (6) des fumées de combustion et dans lequel le gaz de fluidisation pauvre en oxygène est constitué par les fumées de combustion prélevées en aval du dépoussiéreur.

3. Le procédé selon la revendiation 1 ou 2, dans lequel l'autre ou les autres chambres d'échange thermique (75C,75D) alimentées seulement avec de l'air sont la chambre ou les chambres les plus froides de l'échangeur thermique (7).

## Patentansprüche

1. Verfahren zur Verminderung der Stickstoffoxidemissionen in einer Brennstoff-Verbrennungsanlage mit einem Feuerraum (1) mit zirkulierender Wirbelschicht, wobei mindestens ein Teil des Feststoffflusses, der aus der Verbrennung des Brennstoffes in dem Feuerraum entsteht, über mehrere Kammern (75A, 75B, 75C, 75D) eines Wärmetauschers (7), der mit Wirbelschicht arbeitet, wieder in den Feuerraum zurückgeführt wird, wobei dem Wärmetauscher ein Fluidisierungsgas zugeführt wird, das einen geringeren Sauerstoffgehalt besitzt als die Luft, **dadurch gekennzeichnet, dass** einer oder mehreren (75A, 75B) der Wärmetauscherkammern das sauerstoffarme Fluidisierungsgas, das allein oder in einem Luftgemisch verwendet wird, zugeführt wird, und dass der anderen oder den anderen (75C, 75D) Wärmetauscherkammern nur Luft zugeführt wird.

2. Verfahren nach Anspruch 1, demzufolge die Verbrennungsanlage einen Filter (6) für die Rauchgase besitzt, und bei dem das sauerstoffarme Fluidisierungsgas aus den Rauchgasen besteht, die hinter dem Filter abgezogen werden.

3. Verfahren nach Anspruch 1 oder 2, wobei es sich bei der anderen Wärmetauscherkammer oder bei den anderen Wärmetauscherkammem (75C, 75D), der oder denen nur Luft zugeführt wird, um die kälteste Kammer oder die kältesten Kammern des Wärmetauschers (7) handelt.

## Claims

1. A method of decreasing nitrogen oxide emissions in a combustion installation for burning a fuel, which installation includes a hearth (1) operating as a circulating fluidized bed, and in which installation at least a fraction of the flow of solid particles resulting from the combustion of the fuel in the hearth is returned to the hearth via a plurality of heat-exchange chambers (75A, 75B, 75C, 75D) of a heat exchanger (7) operating as a fluidized bed, fed with a fluidization gas which is considerably poorer in oxygen than air, **characterized in that** one or more of the heat-exchanger chamber(s) (75A, 75B) is/are fed with the oxygen-poor fluidization gas used on its own or as mixed with air and one or more of the heat exchanger chamber(s) (75C, 75D) is/are fed with air.

2. A method according to claim 1, in which the combustion installation includes a dust filter (6) for removing the dust from the flue gases, and in which the oxygen-poor fluidization gas is constituted by the flue gases taken downstream from the dust filter.

3. The method according to claim 1 or claim 2, in which the other heat-exchanger chamber(s) (75C, 75D) fed only with air is/are the coldest chambers of the heat exchanger.
